# EUROPEAN PATENT SPECIFICATION

(11) **EP 2 936 107 B1**
(45) Date of publication and mention of the grant of the patent: **18.08.2021**
(21) Application number: 13821529.8
(22) Date of filing: 19.12.2013
(51) Int. Cl.: G01M 3/36

(54) **METHOD AND APPARATUS FOR CONTROLLING AND/OR DETERMINING A PRESSURE**
VERFAHREN UND VORRICHTUNG ZUR STEUERUNG UND/ODER BESTIMMUNG EINES DRUCKS
PROCÉDÉ ET APPAREIL SERVANT À CONTRÔLER ET/OU À DÉTERMINER UNE PRESSION

(30) Priority: 19.12.2012 NL 2010016
(43) Date of publication of application: 28.10.2015
(73) Proprietor: Oxipack B.V., 3992 LL Houten (NL)
(72) Inventor: AARTS, Mathias Leonardus Cornelus, NL-3723 HN Bilthoven (NL)
(74) Representative: V.O.
(86) International application number: PCT/NL2013/050926
(87) International publication number: WO 2014/098594

(56) References cited:
- WO-A1-2007/122201
- DE-A1- 19 813 288
- DE-U1- 29 709 635
- NL-C2- 1 032 367
- None

## Description

### TECHNICAL FIELD

The invention generally relates to the controlling of a pressure in a chamber and/or determination of a pressure prevailing in a package. In particular a method and apparatus for determining a pressure prevailing in a sealed package having a first deformable wall are described.

### BACKGROUND

In the packaging industry there is a general need for robustly determining a pressure prevailing in a package. Many further production steps are based on the determined pressure. For example, the pressure prevailing in a package gives an indication of the leak-tightness of a package. Hence a package may be processed or discarded on the basis of the determined pressure. Additionally, a manufacturing process may be adjusted based on the determined pressure to ensure better packaging results. Furthermore, it is desirable that the pressure prevailing in a package is determined non-invasively.

Documents WO2007/122201 and DE19813288 disclose a method and a device for determining and controlling the pressure prevailing in a package.

### SUMMARY OF THE INVENTION

It is an object of the invention to provide an improved method and apparatus for determining a pressure prevailing in a package. More in general it is an object of the invention to overcome or ameliorate at least one of the disadvantages of the prior art. Alternatively, it is an object of the invention to at least provide the public with a useful choice.

The present invention is defined by the features of the independent claims.

Thereto, according to the invention a method is provided for determining a pressure prevailing in a package, the method comprising the steps of: providing a sealed package having a first deformable wall; providing a measurement head having an inner wall defining a cavity having an opening substantially extending in a measurement plane; abutting the opening against the first deformable wall such that a chamber is formed bounded by the inner wall and a region of the first deformable wall; providing a distance determining device for determining a distance to a predetermined point on the first deformable wall in said region along a direction substantially perpendicular to the measurement plane; controlling an inflow of fluid to and/or an outflow of fluid from the chamber on the basis of the determined distance such that a pressure is obtained in the chamber that is substantially equal to the pressure prevailing in the package; and determining the pressure prevailing in the chamber.

By controlling the inflow and/or outflow of fluid on the basis of the determined distance, a pressure equilibrium can be formed in the chamber. Hence the pressure prevailing in the package can be determined non-invasively as the pressure prevailing in the chamber is indicative of the pressure prevailing in the package. The determined distance provides an indication of the amount of deformation undergone by the deformable wall of the package. The method utilizes the property that as the deformable wall undergoes a slight deformation, the pressure in the chamber is substantially equal to the pressure in the package. It will be appreciated that the determined pressure prevailing in the chamber may be used as measured, or a calibration and/or correction may be applied.

The method applies to sealed packages, such as vacuum sealed packages and controlled atmosphere packages. It will be appreciated that the sealed packages have substantially airtight walls. The first deformable wall comprises a substantially airtight wall, such as a foil, film or membrane, e.g. a plastic film. The method is self regulating.

Optionally, the first deformable wall of the package comprises a substantially airtight wall covered by a porous and/or perforated outer wall on the outside of the package. It has been found that that the porous or perforated outer wall does not prevent the pressure prevailing in the package being determined. A porosity or size and/or number of perforations required for not preventing the pressure prevailing in the package being determined can be determined by way of routine experimentation. The porous and/or perforated outer wall can be free from attachment to the substantially airtight wall, at least within the perimeter of the opening of the cavity.

It will be appreciated that the step of determining the pressure prevailing in the chamber allows to determine the pressure in the package. It will also be appreciated that if this step is omitted a method for controlling a pressure in a chamber is provided. Hence, the method for controlling the pressure in the chamber comprises the steps of providing a sealed package having a first deformable wall, providing a measurement head having an inner wall defining a cavity having an opening substantially extending in a measurement plane, abutting the opening against the first deformable wall such that the chamber is formed bounded by the inner wall and a region of the first deformable wall, providing a distance determining device for determining a distance to a predetermined point on the first deformable wall in said region along a direction substantially perpendicular to the measurement plane, and controlling an inflow of fluid to and/or an outflow of fluid from the chamber on the basis of the determined distance such that a pressure is obtained in the chamber that is substantially equal to the pressure prevailing in the package. This method of controlling the pressure in the chamber can be used to benefit in other applications than determining the pressure prevailing in the package.

Optionally, the step of controlling includes: controlling the inflow of fluid to and/or the outflow of fluid from the chamber on the basis of a direction of travel of the predetermined point on the first deformable wall. It will be clear that the determined distances of the distance determining device can be converted to direction of travel by comparing the current determined distance with a previously determined distance.

Optionally, the step of controlling includes: increasing the inflow of fluid to and/or decreasing the outflow of fluid from the chamber when the direction of travel of the predetermined point on the first deformable wall is outwardly of the package. As the deformation of the deformable wall is indicative of the pressure prevailing in the package, if the deformable wall is travelling outwardly of the package, then the pressure in the chamber is less than the pressure in the package. Therefore the pressure in the chamber needs to be increased to achieve the pressure equilibrium wherein the pressure in the chamber is equal to the pressure in the package.

Optionally, the step of controlling includes: decreasing the inflow of fluid to and/or increasing the outflow of fluid from the chamber when the direction of travel of the predetermined point is inwardly of the package. As the deformation of the deformable wall is indicative of the pressure prevailing in the package, if the deformable wall is travelling inwardly of the package, then the pressure in the chamber is greater than the pressure in the package. Therefore the pressure in the chamber needs to be reduced to achieve the pressure equilibrium wherein the pressure in the chamber is equal to the pressure in the package.

Optionally, the step of controlling includes: increasing the inflow of fluid to and/or decreasing the outflow of fluid from the chamber when the determined distance reaches a first predetermined threshold. Generally, the first predetermined threshold is chosen to indicate that the pressure in the package exceeds the pressure in the chamber.

Optionally, the step of controlling includes: decreasing the inflow of fluid to and/or increasing the outflow of fluid from the chamber when the determined distance reaches a second predetermined threshold. Similarly, the second predetermined threshold is chosen to indicate that the pressure in the chamber exceeds than the pressure in the package.

Optionally, the step of controlling the inflow of fluid to and/or the outflow of fluid from the chamber includes: providing a substantially constant outflow of fluid from the chamber; and varying the inflow of fluid to the chamber. If the outflow is constant, the pressure in the chamber can be controlled by varying the inflow of fluid.

Optionally, the step of controlling the inflow of fluid to and/or the outflow of fluid from the chamber includes: providing a substantially constant inflow of fluid to the chamber; and varying the outflow of fluid from the chamber. If the inflow is constant, the pressure in the chamber can be controlled by varying the outflow of fluid.

Optionally, the inflow of fluid to the chamber includes a leak flow of fluid, such as a flow of fluid passing between the first deformable wall and the measurement head. Hence, the method is robust, and still functions when a seal between the first deformable wall and the measurement head is less than ideal.

Optionally, the method further comprises the step of monitoring the determined pressure prevailing in the package over a predetermined time interval. In some embodiments the pressure in the chamber may be monitored over a predetermined time interval to provide a better representation of the pressure equilibrium formed therein. Optionally, the monitored pressure may be averaged over the predetermined time interval. Additionally, monitoring the pressure in the chamber over a predetermined time interval also provides an indication of the leak-tightness of a package and/or degassing of product in the package. As the product in the package is generally known when monitoring the determined pressure prevailing in the package, a rise of the determined pressure over time can be attributed to degassing of the product and/or to leak-tightness of the package, e.g. on the basis of a model. The method applies to sealed packages, such as vacuum sealed packages and controlled atmosphere packages. It will be appreciated that the sealed packages have substantially airtight walls in view of the purpose it needs to serve. The skilled person will be aware that packaging materials commonly used in sealed packages, such as plastics, often display a certain permeability to air or oxygen in particular. Such materials are also considered to be airtight in view of the purpose they need to serve and can easily be selected thereto. Of course it is possible that at least one of the walls of the package is inadvertently not airtight, i.e. leaking, that can be the reason for determining leak-tightness of the package.

Optionally, the method further comprises the step of determining the leak-tightness of the package and/or degassing of product in the package including: comparing the determined pressure prevailing in the package to a predetermined test threshold. Hence through a comparison the leak-tightness of the package and/or degassing can be tested, and further action can be decided upon.

Optionally, the first deformable wall of the package comprises a substantially airtight wall covered by a porous and/or perforated outer wall on the outside of the package. It has been found that that the porous or perforated outer wall does not prevent the leak-tightness and/or degassing being determined. A porosity or size and/or number of perforations required for not preventing the leak-tightness and/or degassing being determined can be determined by way of routine experimentation. This provides the advantage that the leak-tightness can be determined of a sealed package that includes an air-permeable outer wall, such as a paper outer wrapping.

Also according to the invention an apparatus is provided comprising a measurement head, a distance determining device, a controller, an inlet, and an outlet. The measurement head includes an inner wall defining a cavity having an opening substantially extending in a measurement plane. The cavity is in fluid communication with the inlet, and the cavity is in fluid communication with the outlet. The measurement head is arranged for abutting the opening against a deformable wall of a sealed package such that a chamber is formed bounded by the inner wall and a region of the deformable wall. The distance determining device is arranged for determining a distance to a predetermined point on the deformable wall in a direction substantially perpendicular to the measurement plane, and wherein the distance determining device is further arranged for communicating the determined distance to the controller. The controller is arranged for controlling an inflow control unit in fluid communication with the inlet and/or an outflow control unit in fluid communication with the outlet on the basis of the determined distance such that a pressure is obtained in the chamber that is substantially equal to a pressure prevailing in the package. The apparatus further includes a pressure sensor arranged for determining the pressure in the chamber.

Hence the above apparatus determines the pressure prevailing in the package non-invasively. The controller controls the inflow control unit and/or the outflow control unit on the basis of the determined distance of the deformable wall from the distance determining device. The pressure in the chamber is indicative of the pressure in the package, and is measured by a pressure sensor.

In an embodiment, the inlet is included in the opening of the measurement head. In this embodiment the inlet is formed by leakiness of the seal between the measurement head and the first deformable wall of the package.

Optionally, the outflow control unit includes a pump and/or a valve. It will be appreciated that both controlling a pump and controlling a valve connected to a pump result in controlling the outflow of fluid.

Optionally, the inflow control unit includes a valve.

Optionally, the valve(s) may be one of a proportional valve or a progressive valve. The controller controls the valve included in the inflow control unit and/or outflow control unit. In an embodiment, the valve opens in proportion to the determined distance. In another embodiment, the controller opens the valve when a predetermined distance is reached.

Optionally, the measurement head further includes a comparator, wherein the comparator is arranged for comparing the determined (change over time of) pressure with a predetermined test threshold to determine a leak-tightness of the package. Hence the apparatus is capable of determining the leak-tightness of the package. Optionally, the apparatus is further provided with a feedback unit arranged for indicating the leak-tightness of the sealed package to a user or to a further apparatus. In this way the user or further apparatus is efficiently informed of the leak-tightness of the sealed package. Furthermore, with this information possible further actions, such as discarding the package, can be taken.

Optionally the distance determining device includes one of a proximity sensor, an optical distance sensor, a laser distance sensor, an electrical distance sensor, an inductive distance sensor, and a mechanical distance sensor.

Optionally, the distance determining device includes a rod, wherein a distal end of the rod is slidably mounted to the measurement head. The rod may extend through the cavity substantially perpendicular to the measurement plane. A proximal end of the rod is arranged for contacting the deformable wall. Hence the distance determining device is mechanical.

Optionally, the distance determining device further includes an induction unit arranged for determining a displacement of the rod. It will be appreciated that thereto the rod includes a metallic, magnetisable or magnetic portion. The induction unit communicates the distance to the controller.

Optionally, the distal end of the rod is arranged for actuating the inflow control unit, and wherein the inflow control unit is a valve. In this way both the distance determining device, the communication of the determined distance, and the controller are mechanical hardware, and are therefore robust and inexpensive.

Additionally, according to the invention an assembly is provided comprising an apparatus according to the invention and a sealed package having a first deformable wall. Optionally, the sealed package is one of a vacuum sealed package and a controlled atmosphere package. It will be clear that the package only needs to have a single deformable wall to be suitable for use with the method and apparatus according to the invention. Furthermore, by deformable it is meant that said wall is flexible such that the package wall deforms when a pressure difference between the pressure inside the package and outside the package exists. For example, this is the case with packaging films.

### BRIEF DESCRIPTION OF THE DRAWINGS

The invention will now be further elucidated by means of non-limiting examples referring to the drawings, in which
Fig. 1 is a schematic side view of a first embodiment according to the invention;
Fig. 2 is a schematic side view of a second embodiment according to the invention;
Fig. 3 is a schematic side view of a third embodiment according to the invention;
Fig. 4 is a schematic side view of a fourth embodiment according to the invention; and
Fig. 5 is a schematic side view of a fifth embodiment according to the invention.

### DETAILED DESCRIPTION

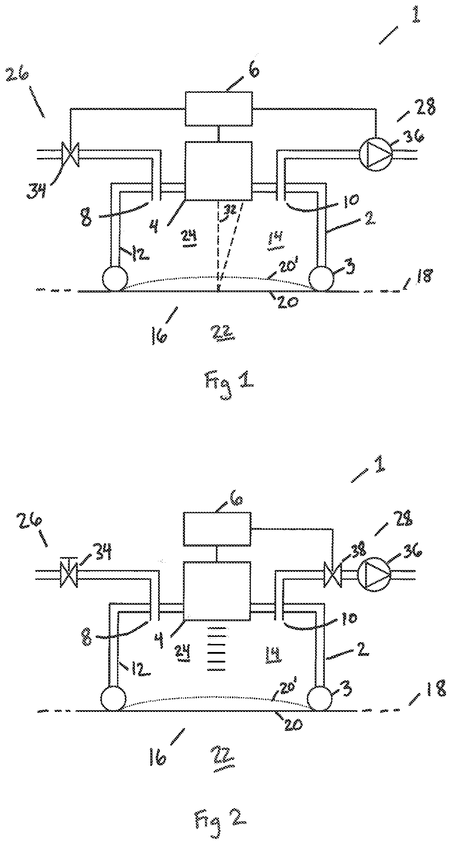

In the detailed description four embodiments according to the invention are described. In Figs. 1, 2, 3, and 4, an apparatus 1 comprising a measurement head 2, including a seal 3, a distance determining device 4, a controller 6, an inlet 8, and an outlet 10 are depicted. The measurement head includes an inner wall 12 defining a cavity 14 having an opening 16 substantially extending in a measurement plane 18. The cavity 14 is in fluid communication with the inlet 8, and the cavity is in fluid communication with the outlet 10. The opening 16 of the measurement head abuts to a first deformable wall 20 of a sealed package 22. A chamber 24 is formed, in the cavity 14, bounded by the inner wall 12 and a region of the deformable wall 20. In the figures the deformable wall 20 is shown in a first position substantially extending in the measurement plane 18, and a in a deformed position indicated by 20'. The distance determining device 4 is arranged for determining a distance to a predetermined point on the deformable wall in a direction substantially perpendicular to the measurement plane 18, i.e. the distance determining device can determine a deflection of the region of the deformable wall relative to the measurement plane. The distance determining device 4 is further arranged for communicating the determined distance to the controller 6. The controller 6 is arranged for controlling an inflow control unit 26 in fluid communication with the inlet 8 and/or an outflow control unit 28 in fluid communication with the outlet 10 on the basis of the determined distance such that a pressure is obtained in the chamber 24 that is substantially equal to a pressure prevailing in the package 22. The cavity may further include a pressure sensor, not pictured, but conventional, arranged for determining the pressure in the chamber. In the depicted embodiments the fluid is air.

In Fig. 1, both the inflow control unit 26 and the outflow control unit 28 are present. In this example, the inflow control unit 26 includes a valve 34. The outflow control unit 28 includes, in this example, a pump 36. The distance determining device 4 is a laser distance sensor. A laser beam 32 is projected onto the first deformable wall 20 and the distance of the wall 20 to the distance determining device 4 is determined by an optical sensor.

In this example, the controller 6 drives the pump 36 of the outflow control unit 28 such that a substantially constant outflow of fluid from the chamber 24 is achieved. The distance determined by the distance determining device 4 decreases as the pressure in the chamber 24 decreases below the pressure prevailing in the package 22. As the first deformable wall 20 deforms, outwardly of the package 22, to the position indicated by 20', the control unit 6 varies the inflow of fluid to the chamber 24 through the inlet 8, by opening valve 34 of the inflow control unit 26. In this embodiment the valve 34 is a progressive valve, and is opened further as the deformable wall 20 deforms further outwardly from the package 22. As the pressure in the chamber 24 increases due to the inflow of fluid, the deformable wall returns toward the state 20. The distance determining device 4 communicates the increase of the determined distance, and the controller 6 closes the valve 34 of inflow control unit 26. As a result the pressure in the chamber 24 begins to decrease again. In this way, the pressure in the chamber 24 oscillates around the pressure prevailing in the package 22. It will be appreciated that an amplitude of such pressure oscillation depends on how quickly the valve 34 is closed and opened. It will be clear that the amplitude can be chosen by careful design of the apparatus. In practice, the valve 34 may reach an equilibrium position in which the valve does not completely open or close, but remains slightly opened to allow an inflow of fluid that is required for maintaining the pressure inside the chamber. The pressure prevailing in the chamber 24 is substantially equal to the pressure prevailing in the package 22. The pressure achieved in the chamber may be slightly lower than the pressure in the package 22 at rest (i.e without being measured) due to the slight deformation of the deformable wall 20 in the equilibrium state. In practice this difference is often negligible as volume associated with deformation of the wall 20 can be significantly smaller than the volume of the package. In applications where this difference needs to be accounted for, a calibration of or correction to the determined pressure may be applied.

In Fig. 2 another embodiment according to the invention is shown. In this example the distance determining device 4 is a proximity sensor. The inflow control unit 26 includes valve 34, in this embodiment an adjustable valve. The outflow control unit 28 includes a pump 36 and a valve 36, controllable by the controller 6. In this example, pump 36 is operated at a constant speed. Adjustable valve 34 is adjusted to provide a substantially constant inflow of fluid. Therefore, in function of the determined distance by the distance determining device 4, the controller 6 varies the controllable valve 38 so as to control the outflow of fluid. Hence, a pressure is obtained in the chamber 24 in equilibrium with the pressure prevailing in the package. Again the pressure equilibrium is indicative of the pressure prevailing the in the package 22. In practice, the valve 36 may reach an equilibrium position in which the valve does not completely open or close, but remains slightly opened to allow an outflow of fluid that is required for maintaining the pressure inside the chamber.

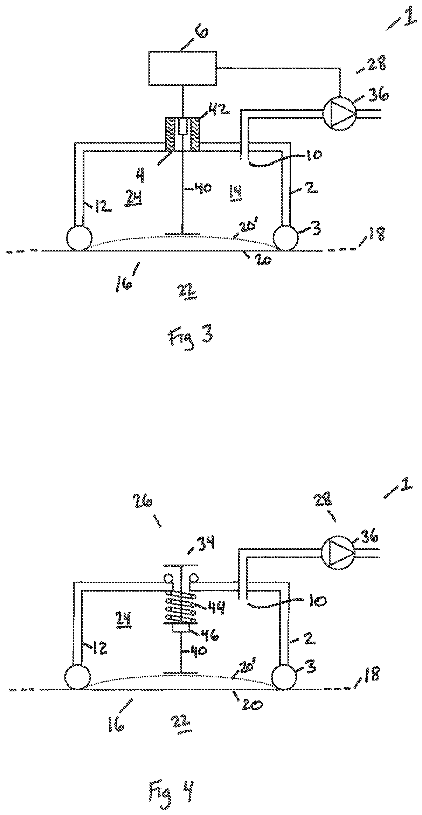

In Fig. 3 a third embodiment according to the invention is pictured. In this example, the distance determining device 4 includes a rod 40 and an inductive unit 42. The rod includes a metallic portion. The displacement of the metallic portion of the rod 40 is measured by the inductive unit 42 by its inductive coil, and communicated to the controller 6. In this embodiment the inlet 8 and inflow control unit 26 is the leakiness of the seal formed between the measurement head 2 and the first deformable wall 20 of the package 22. The controller 6 decreases the outflow of fluid from the chamber 24 when the determined distance reaches a first predetermined threshold by decreasing the pumping action of the pump 36, or shutting off the pump 36. Fluid enters the chamber through the seal between the measurement head 2 and the deformable wall 20. When the determined distance reaches a second predetermined threshold the controller 6 increases the outflow of fluid from the chamber 24, by increasing the pumping action of pump 36, or turning pump 36 on. In this way, the pressure is regulated in the chamber 24 and is indicative of the pressure prevailing in the package 22.

In Fig. 4, a fourth embodiment according to the invention is pictured. In this example, the distance determining device 4 includes a rod 40. Further, in this example the controller 6 is implemented by coupling the rod 40 directly to the inflow control unit 26. In this embodiment the inflow control unit 26 includes the valve 34. The valve 34, in this embodiment, is biased in a closed position by a resilient member 44. A nut 46 is provided for adjusting the biasing effect of the resilient member 44. The distance determining device 4, in this embodiment rod 40, directly actuates valve 34 to provide inflow of fluid. The outflow control unit 28 includes, in this example, the pump 36. The pump 36 pumps fluid continuously from the chamber 24. As the valve 34 is biased in the closed position, the pressure in the chamber 24 begins to drop. When the pressure in the chamber 24 drops slightly below the pressure prevailing in the package 22, the deformable wall 20 moves outwardly of the package 22, as depicted by 20'. The outward movement of the deformable wall 20 causes the rod 40 of the distance determining device 4 to move. When the determined distance is less than a first predetermined threshold, the rod actuates the valve 34 to open. As the valve 34 opens, an inflow of fluid to the chamber 24 occurs. This inflow of fluid results in an increase of the pressure in the chamber 24, and causes the deformable wall 20 of the package 22 to move inwardly of the package. When the determined distance is more than a second predetermined threshold, the rod 40 actuates the valve 34 to shut, thus stopping the inflow of fluid into the chamber 24. The cycle repeats, and a self regulating pressure equilibrium is formed in the chamber 24, which is indicative of the pressure in the package 22. Again, slight oscillations in the pressure may occur due to the repeated opening and closing of the valve. In practice, the valve may reach an equilibrium position in which the valve does not completely open or close, but remains slightly opened to allow an inflow of fluid that is required for maintaining the pressure inside the chamber. In this example, the equilibrium is achieved by providing a substantially constant outflow of fluid from the chamber 24 and varying the inflow of fluid to the chamber 24, on the basis of the displacement of the deformable wall 20 of the package.

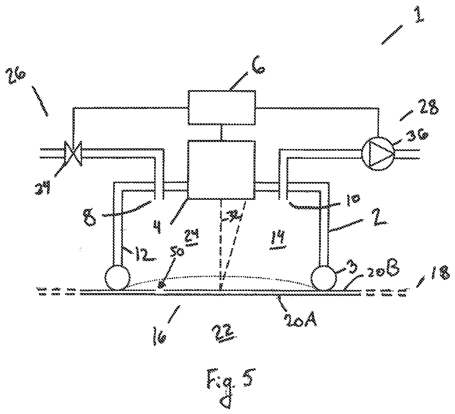

In Fig. 5, a fifth embodiment according to the invention is pictured. The embodiment shown in Fig. 5 is similar to the embodiment shown in Fig. 1. In Fig. 5 the deformable wall 20 includes an inner deformable wall 20A and an outer deformable wall 20B. In this example, the inner deformable wall 20A is made from a leak-tight material, such as a plastic film. In this example the outer deformable wall 20B is perforated. The perforation 50 is contained inside the cavity 14. Alternatively, or additionally, the outer deformable wall 20B can be made from a porous material. It will be appreciated that in use the perforation 50 or porosity allows the volume 52 between the inner deformable wall 20A and the outer deformable wall 20B to be maintained at the same pressure as the cavity 14. This prevents the outer deformable wall 20B to move outwardly with respect to the inner deformable wall 20A. Therefore, the inner deformable wall 20A and the outer deformable wall 20B will remain in contact while moving, so that any change in the determined distance to a predetermined point on the deformable outer wall 20B is representative for the change in distance to the deformable inner wall 20A.

An additional embodiment relates to the determination of a pressure and the variation of the pressure in a sealed package wherein at least one of the walls of the package is made from a flexible material, in this embodiment a packaging film. The embodiment is carried out by pressing the measurement head to the flexible portion of the package such that the chamber of the measurement head and the interior of the package share a common flexible wall. After connecting the chamber to a vacuum pump the pressure in the chamber is lowered. When the pressure in the chamber becomes lower than the pressure in the package, the packaging film lifts away from the packaged material. The displacement of the packaging film is used to regulate the pressure in the chamber in such a way that the pressure in the chamber can not drop below the pressure in the package and through the continuous pumping of the vacuum pump the pressure in the chamber can not rise above the pressure in the package. Therefore the pressure in the chamber will always be equal to the pressure in the package. Furthermore, regulating the pressure by the displacement of the package film corrects for any possible leaks between the package and the test chamber.

Typically, the distance determining device is included in the measurement head, however it is conceivable that the distance determining device is provided elsewhere, for example on an opposite side of the package from the side of the package where the measurement head abutted.

It will be appreciated that the distance determining device, and the controller can be embodied as dedicated electronic circuits, possibly including software code portions. In turn these software can be executed on, and e.g. stored in a memory of, a programmable apparatus such as a computer.

In the foregoing specification, the invention has been described with reference to specific examples of embodiments of the invention. It will, however, be evident that various modifications and changes may be made therein without departing from scope of the invention as set forth in the appended claims.

In the example of Fig. 5 the deformable wall 20 includes an inner deformable wall 20A and an outer deformable wall 20B. It will be appreciated that the inner and outer deformable wall are generally applicable. Hence, also the embodiments shown in Figs. 2-4 can be provided with the inner and outer deformable wall.

However, other modifications, variations, and alternatives are also possible. The specifications, drawings and examples are, accordingly, to be regarded in an illustrative rather than in a restrictive sense.

In the claims, any reference signs placed between parentheses shall not be construed as limiting the claim. The word 'comprising' does not exclude the presence of other features or steps than those listed in a claim. Furthermore, the words 'a' and 'an' shall not be construed as limited to 'only one', but instead are used to mean 'at least one', and do not exclude a plurality. The mere fact that certain measures are recited in mutually different claims does not indicate that a combination of these measures cannot be used to advantage.

## Claims

1. A method for controlling a pressure in a chamber (24), the method comprising the steps of:
- providing a sealed package (22) having a first deformable wall (20);
- providing a measurement head (2) having an inner wall (12) defining a cavity (14) having an opening (16) extending in a measurement plane (18);
- abutting the opening against the first deformable wall such that the chamber is formed bounded by the inner wall and a region of the first deformable wall,
- providing a distance determining device (4) for determining a distance to a predetermined point on the first deformable wall in said region along a direction substantially perpendicular to the measurement plane;
- controlling an inflow of fluid to and/or an outflow of fluid from the chamber on the basis of the determined distance such that a pressure is obtained in the chamber that is substantially equal to the pressure prevailing in the package;
**characterized in that** the step of controlling includes controlling the increasing and decreasing of the inflow and/or outflow of fluid on the basis of the determined distance in an oscillatory manner, such that the pressure in the chamber oscillates.

2. A method for determining a pressure prevailing in a package, the method comprising the steps of:
- providing a sealed package (22) having a first deformable wall (20);
- providing a measurement head (2) having an inner wall (12) defining a cavity (14) having an opening (16) extending in a measurement plane (18);
- abutting the opening against the first deformable wall such that a chamber is formed bounded by the inner wall and a region of the first deformable wall,
- providing a distance determining device for determining a distance to a predetermined point on the first deformable wall in said region along a direction substantially perpendicular to the measurement plane;
- controlling an inflow of fluid to and/or an outflow of fluid from the chamber on the basis of the determined distance such that a pressure is obtained in the chamber that is substantially equal to the pressure prevailing in the package; and
- determining the pressure prevailing in the chamber; **characterized in that** the step of controlling includes controlling the increasing and decreasing of the inflow and/or outflow of fluid on the basis of the determined distance in an oscillatory manner, such that the pressure in the chamber oscillates.

3. Method according to claim 1 or 2, wherein the step of controlling includes
- opening, or further opening, a valve (34) that controls the inflow and/or outflow or closing, or further closing, said valve, and/or
- increasing or decreasing the pumping action of a pump (36), such as turning the pump on or off.

4. Method according to any one of claims 1-3, wherein the step of controlling includes
- controlling the inflow and/or outflow of fluid on the basis of the determined distance, such that the pressure in the chamber is in equilibrium with the pressure prevailing in the package.

5. Method according to any one of the preceding claims, wherein the step of controlling includes
- controlling the inflow of fluid to and/or the outflow of fluid from the chamber on the basis of a direction of travel of the predetermined point on the first deformable wall.

6. Method according to any of the preceding claims, wherein the step of controlling includes
- increasing the inflow of fluid to and/or decreasing the outflow of fluid from the chamber when the determined distance reaches a first predetermined threshold, and/or
- decreasing the inflow of fluid to and/or increasing the outflow of fluid from the chamber when the determined distance reaches a second predetermined threshold.

7. Method according to any one of the preceding claims, wherein the step of controlling the inflow of fluid to and/or the outflow of fluid from includes:
- providing a substantially constant outflow of fluid from the chamber; and
- varying the inflow of fluid to the chamber; or
- providing a substantially constant inflow of fluid to the chamber; and
- varying the outflow of fluid from the chamber.

8. Method according to any one of the preceding claims, wherein in the inflow of fluid to the chamber includes a leak flow of fluid passing between the first deformable wall and the measurement head.

9. Method according to any one of the preceding claims, wherein the method further comprising the step of monitoring the determined pressure prevailing in the package over a predetermined time interval.

10. An apparatus comprising a measurement head (2), a distance determining device (4), a controller (6), an inlet (8), and an outlet (10),
wherein the measurement head includes an inner wall (12) defining a cavity (14) having an opening (16) extending in a measurement plane (18),
wherein the cavity is in fluid communication with the inlet, and the cavity is in fluid communication with the outlet,
wherein the measurement head is arranged for abutting the opening against a deformable wall of a sealed package (22) such that a chamber (24) is formed bounded by the inner wall and a region of the deformable wall
wherein the distance determining device is arranged for determining a distance to a predetermined point on the deformable wall in a direction substantially perpendicular to the measurement plane, and wherein the distance determining device is further arranged for communicating the determined distance to the controller,
wherein the controller is arranged for controlling an inflow control unit in fluid communication with the inlet and/or an outflow control unit in fluid communication with the outlet on the basis of the determined distance such that a pressure is obtained in the chamber that is substantially equal to a pressure prevailing in the package;
**characterized in that** the controller is arranged for controlling the increasing and decreasing of the inflow and/or outflow of fluid on the basis of the determined distance in an oscillatory manner, such that the pressure in the chamber oscillates.

11. Apparatus according to claim 10, wherein the cavity further includes a pressure sensor arranged for determining the pressure in the chamber.

12. Apparatus according to claim 10 or 11, wherein the outflow control unit includes a pump and/or a valve; and/or wherein the inflow control unit includes a pump and/or a valve (34), wherein the controller is arranged for
- opening, or further opening, the valve that controls the inflow and/or outflow or closing, or further closing, said valve.

13. Apparatus according to any one of claims 10-12, wherein the controller is arranged for
- increasing or decreasing the pumping action of a pump (36) that provides the inflow and/or outflow, such as turning the pump on or off.

14. Apparatus according to any one of claims 10-13, wherein the controller is arranged for
- controlling the inflow and/or outflow of fluid on the basis of the determined distance, such that the pressure in the chamber is in equilibrium with the pressure prevailing in the package.

15. Apparatus according to any one of claims 10-14, wherein the controller is arranged for
- controlling the increasing and decreasing of the inflow and/or outflow of fluid, such that the pressure in the chamber oscillates with a predetermined amplitude.

16. Apparatus according to any one of claims 10-15, wherein the controller is arranged for controlling the increasing and decreasing of the inflow and/or outflow of fluid such that the oscillating includes opening or further opening the valve and/or the decreasing includes closing or further closing the valve in an oscillatory manner.

17. An assembly comprising an apparatus according to any one of claims 10-16 and a sealed package having a first deformable wall, wherein the first deformable wall includes a substantially airtight wall.

## Patentansprüche

1. Verfahren zur Steuerung eines Drucks in einer Kammer (24), wobei das Verfahren die Schritte umfasst:
- Bereitstellen einer versiegelten Verpackung (22) mit einer ersten verformbaren Wand (20);
- Bereitstellen eines Messkopfes (2) mit einer Innenwand (12), die einen Hohlraum (14) mit einer Öffnung (16) definiert, die sich in einer Messebene (18) erstreckt;
- Anlegen der Öffnung an die erste verformbare Wand, so dass die Kammer gebildet wird, die von der Innenwand und einem Bereich der ersten verformbaren Wand begrenzt wird,
- Bereitstellen einer Abstandsbestimmungsvorrichtung (4) zum Bestimmen eines Abstands zu einem vorbestimmten Punkt auf der ersten verformbaren Wand in dem Bereich entlang einer Richtung, die im Wesentlichen senkrecht zu der Messebene ist;
- Steuern eines Zuflusses von Fluid zu und/oder eines Abflusses von Fluid aus der Kammer auf der Grundlage des bestimmten Abstands, so dass in der Kammer ein Druck erhalten wird, der im Wesentlichen gleich dem in der Verpackung herrschenden Druck ist;
**dadurch gekennzeichnet, dass** der Schritt des Steuerns das Steuern des Erhöhens und Verringerns des Zuflusses und/oder des Abflusses von Fluid auf der Grundlage des bestimmten Abstands in einer oszillierenden Weise einschließt, so dass der Druck in der Kammer oszilliert.

2. Verfahren zur Bestimmung eines in einer Verpackung herrschenden Drucks, wobei das Verfahren die Schritte umfasst:
- Bereitstellen einer versiegelten Verpackung (22) mit einer ersten verformbaren Wand (20);
- Bereitstellen eines Messkopfes (2) mit einer Innenwand (12), die einen Hohlraum (14) mit einer Öffnung (16) definiert, die sich in einer Messebene (18) erstreckt;
- Anlegen der Öffnung an die erste verformbare Wand, so dass eine Kammer gebildet wird, die von der Innenwand und einem Bereich der ersten verformbaren Wand begrenzt wird,
- Bereitstellen einer Abstandsbestimmungsvorrichtung zum Bestimmen eines Abstands zu einem vorbestimmten Punkt auf der ersten verformbaren Wand in dem genannten Bereich entlang einer Richtung, die im Wesentlichen senkrecht zur Messebene verläuft;
- Steuern eines Zuflusses von Fluid in die Kammer und/oder eines Abflusses von Fluid aus der Kammer auf der Grundlage des bestimmten Abstands, so dass in der Kammer ein Druck erhalten wird, der im Wesentlichen gleich dem in der Verpackung herrschenden Druck ist; und
- Bestimmen des in der Kammer herrschenden Drucks; **dadurch gekennzeichnet, dass** der Schritt des Steuerns das Steuern des Erhöhens und Verringerns des Zuflusses und/oder des Abflusses von Fluid auf der Grundlage des bestimmten Abstands in einer oszillierenden Weise einschließt, so dass der Druck in der Kammer oszilliert.

3. Verfahren nach Anspruch 1 oder 2, wobei der Schritt des Steuerns einschließt
- Öffnen oder weiteres Öffnen eines Ventils (34), das den Zufluss und/oder den Abfluss steuert, oder das Schließen oder das weitere Schließen des Ventils, und/oder
- Erhöhen oder Verringern der Pumpleistung einer Pumpe (36), wie das Ein- oder Ausschalten der Pumpe.

4. Verfahren nach einem der Ansprüche 1 bis 3, wobei der Schritt des Steuerns einschließt
- Steuern des Zuflusses und/oder des Abflusses von Fluid auf der Grundlage des bestimmten Abstands, so dass der Druck in der Kammer im Gleichgewicht mit dem in der Verpackung herrschenden Druck ist.

5. Verfahren nach einem der vorhergehenden Ansprüche, wobei der Schritt des Steuerns einschließt
- Steuern des Zuflusses von Fluid in und/oder des Abflusses von Fluid aus der Kammer auf der Grundlage einer Bewegungsrichtung des vorbestimmten Punktes auf der ersten verformbaren Wand.

6. Verfahren nach einem der vorhergehenden Ansprüche, wobei der Schritt des Steuerns einschließt
- Erhöhen des Zuflusses von Fluid in die Kammer und/oder Verringern des Abflusses von Fluid aus der Kammer, wenn der bestimmte Abstand einen ersten vorbestimmten Schwellenwert erreicht, und/oder
- Verringern des Zuflusses von Fluid in die Kammer und/oder Erhöhen des Abflusses von Fluid aus der Kammer, wenn der bestimmte Abstand einen zweiten vorbestimmten Schwellenwert erreicht.

7. Verfahren nach einem der vorhergehenden Ansprüche, wobei der Schritt des Steuerns des Zuflusses von Fluid zu und/oder des Abflusses von Fluid aus einschließt:
- Bereitstellen eines im Wesentlichen konstanten Ausflusses von Fluid aus der Kammer; und
- Variieren des Zuflusses von Fluid zu der Kammer; oder
- Bereitstellen eines im Wesentlichen konstanten Zuflusses von Fluid zu der Kammer; und
- Variieren des Abflusses von Fluid aus der Kammer.

8. Verfahren nach einem der vorhergehenden Ansprüche, wobei der Zufluss von Fluid zu der Kammer einen Leckstrom von Fluid einschließt, der zwischen der ersten verformbaren Wand und dem Messkopf hindurchgeht.

9. Verfahren nach einem der vorhergehenden Ansprüche, wobei das Verfahren ferner den Schritt des Überwachens des bestimmten Drucks, der in der Verpackung herrscht, über ein vorbestimmtes Zeitintervall umfasst.

10. Vorrichtung, die einen Messkopf (2), eine Abstandsbestimmungsvorrichtung (4), eine Steuerung (6), einen Einlass (8) und einen Auslass (10) umfasst,
wobei der Messkopf eine Innenwand (12) einschließt, die einen Hohlraum (14) mit einer Öffnung (16) definiert, die sich in einer Messebene (18) erstreckt, wobei der Hohlraum in Fluidverbindung mit dem Einlass steht und der Hohlraum in Fluidverbindung mit dem Auslass steht,
wobei der Messkopf so angeordnet ist, dass die Öffnung an einer verformbaren Wand einer versiegelten Verpackung (22) anliegt, so dass eine Kammer (24) gebildet wird, die von der Innenwand und einem Bereich der verformbaren Wand begrenzt wird
wobei die Abstandsbestimmungsvorrichtung zum Bestimmen eines Abstands zu einem vorbestimmten Punkt auf der verformbaren Wand in einer Richtung im Wesentlichen senkrecht zu der Messebene angeordnet ist, und wobei die Abstandsbestimmungsvorrichtung ferner zum Übermitteln des bestimmten Abstands an die Steuerung angeordnet ist,
wobei die Steuerung zum Steuern einer mit dem Einlass in Fluidverbindung stehenden Zuflusssteuereinheit und/oder einer mit dem Auslass in Fluidverbindung stehenden Abflusssteuereinheit auf der Grundlage des bestimmten Abstands angeordnet ist, so dass in der Kammer ein Druck erhalten wird, der im Wesentlichen gleich einem in der Verpackung herrschenden Druck ist;
**dadurch gekennzeichnet, dass** der Regler zum Steuern des Erhöhens und des Verringerns des Zuflusses und/oder des Abflusses von Fluid auf der Grundlage des bestimmten Abstands in einer oszillierenden Weise angeordnet ist, so dass der Druck in der Kammer oszilliert.

11. Vorrichtung nach Anspruch 10, wobei der Hohlraum ferner einen Drucksensor einschließt, der zum Bestimmen des Drucks in der Kammer angeordnet ist.

12. Vorrichtung nach Anspruch 10 oder 11, wobei die Abflusssteuereinheit eine Pumpe und/oder ein Ventil einschließt; und/oder wobei die Zuflusssteuereinheit eine Pumpe und/oder ein Ventil (34) einschließt, wobei die Steuerung angeordnet ist zum
- Öffnen oder weiteren Öffnen des Ventils, das den Zufluss und/oder den Abfluss steuert, oder Schließen oder weiteren Schließen des Ventils.

13. Vorrichtung nach einem der Ansprüche 10 bis 12, wobei die Steuerung angeordnet ist zum
- Erhöhen oder Verringern der Pumpleistung einer Pumpe (36), die den Zufluss und/oder den Abfluss bereitstellt, wie das Ein- oder Ausschalten der Pumpe.

14. Vorrichtung nach einem der Ansprüche 10 bis 13, wobei die Steuerung angeordnet ist zum
- Steuern des Zuflusses und/oder des Abflusses von Fluid auf der Grundlage des bestimmten Abstands, so dass der Druck in der Kammer im Gleichgewicht mit dem in der Verpackung herrschenden Druck ist.

15. Vorrichtung nach einem der Ansprüche 10 bis 14, wobei die Steuerung angeordnet ist zum
- Steuern des Zuflusses und/oder des Abflusses von Fluid, so dass der Druck in der Kammer mit einer vorbestimmten Amplitude oszilliert.

16. Vorrichtung nach einem der Ansprüche 10 bis 15, wobei die Steuerung zum Steuern des Erhöhens und des Verringerns des Zuflusses und/oder des Abflusses von Fluid angeordnet ist, so dass das Oszillieren das Öffnen oder das weitere Öffnen des Ventils einschließt und/oder das Verringern das Schließen oder das weitere Schließen des Ventils in einer oszillierenden Weise einschließt.

17. Baugruppe, die eine Vorrichtung nach einem der Ansprüche 10 bis 16 und eine versiegelte Verpackung mit einer ersten verformbaren Wand umfasst, wobei die erste verformbare Wand eine im Wesentlichen luftdichte Wand einschließt.

## Revendications

1. Procédé de commande d'une pression dans une chambre (24), le procédé comprenant les étapes consistant à :
- fournir un emballage étanche (22) ayant une première paroi déformable (20) ;
- fournir une tête de mesure (2) ayant une paroi intérieure (12) définissant une cavité (14) ayant une ouverture (16) s'étendant dans un plan de mesure (18) ;
- adosser l'ouverture contre la première paroi déformable de telle sorte que la chambre est formée en étant délimitée par la paroi intérieure et une région de la première paroi déformable,
- fournir un dispositif de détermination de distance (4) pour déterminer une distance jusqu'à un point prédéterminé sur la première paroi déformable dans ladite région le long d'une direction sensiblement perpendiculaire au plan de mesure ;
- commander un afflux de fluide vers la chambre et/ou un déversement de fluide depuis celle-ci sur la base de la distance déterminée de manière à obtenir une pression dans la chambre qui est sensiblement égale à la pression régnant dans l'emballage ;
**caractérisé en ce que** l'étape de commande comprend la commande de l'augmentation et de la diminution de l'afflux et/ou du déversement de fluide sur la base de la distance déterminée d'une manière oscillante, de sorte que la pression dans la chambre oscille.

2. Procédé de détermination d'une pression régnant dans un emballage, le procédé comprenant les étapes consistant à :
- fournir un emballage étanche (22) ayant une première paroi déformable (20) ;
- fournir une tête de mesure (2) ayant une paroi intérieure (12) définissant une cavité (14) ayant une ouverture (16) s'étendant dans un plan de mesure (18) ;
- adosser l'ouverture contre la première paroi déformable de telle sorte qu'une chambre est formée en étant délimitée par la paroi intérieure et une région de la première paroi déformable,
- fournir un dispositif de détermination de distance pour déterminer une distance jusqu'à un point prédéterminé sur la première paroi déformable dans ladite région le long d'une direction sensiblement perpendiculaire au plan de mesure ;
- commander un afflux de fluide vers la chambre et/ou un déversement de fluide depuis celle-ci sur la base de la distance déterminée de manière à obtenir une pression dans la chambre qui est sensiblement égale à la pression régnant dans l'emballage ; et
- déterminer la pression régnant dans la chambre ; **caractérisé en ce que** l'étape de commande comprend la commande de l'augmentation et de la diminution de l'afflux et/ou du déversement de fluide sur la base de la distance déterminée d'une manière oscillante, de sorte que la pression dans la chambre oscille.

3. Procédé selon la revendication 1 ou 2, dans lequel l'étape de commande comprend
- l'ouverture, ou l'ouverture supplémentaire, d'une vanne (34) qui commande l'afflux et/ou le déversement ou la fermeture, ou la fermeture supplémentaire, de ladite vanne, et/ou
- l'augmentation ou la diminution de l'action de pompage d'une pompe (36), comme la mise en marche ou l'arrêt de la pompe.

4. Procédé selon l'une quelconque des revendications 1 à 3, dans lequel l'étape de commande comprend
- la commande de l'afflux et/ou du déversement de fluide sur la base de la distance déterminée, de telle sorte que la pression dans la chambre est à l'équilibre avec la pression régnant dans l'emballage.

5. Procédé selon l'une quelconque des revendications précédentes, dans lequel l'étape de commande comprend
- la commande de l'afflux de fluide la chambre et/ou du déversement de fluide depuis celle-ci sur la base d'une direction de déplacement du point prédéterminé sur la première paroi déformable.

6. Procédé selon l'une quelconque des revendications précédentes, dans lequel l'étape de commande comprend
- l'augmentation de l'afflux de fluide vers la chambre et/ou la diminution du déversement de fluide depuis celle-ci lorsque la distance déterminée atteint un premier seuil prédéterminé, et/ou
- la diminution de l'afflux de fluide vers la chambre et/ou l'augmentation du déversement de fluide depuis celle-ci lorsque la distance déterminée atteint un second seuil prédéterminé.

7. Procédé selon l'une quelconque des revendications précédentes, dans lequel l'étape de commande de l'afflux de fluide et/ou du déversement de fluide comprend les étapes consistant à :
- fournir un déversement de fluide sensiblement constant depuis la chambre ; et
- faire varier l'afflux de fluide dans la chambre ; ou
- fournir un afflux sensiblement constant de fluide dans la chambre ; et
- faire varier le déversement de fluide depuis la chambre.

8. Procédé selon l'une quelconque des revendications précédentes, dans lequel l'afflux de fluide vers la chambre comprend un flux de fuite de fluide passant entre la première paroi déformable et la tête de mesure.

9. Procédé selon l'une quelconque des revendications précédentes, dans lequel le procédé comprend en outre l'étape de surveillance de la pression déterminée régnant dans l'emballage sur un intervalle de temps prédéterminé.

10. Appareil comprenant une tête de mesure (2), un dispositif de détermination de distance (4), un dispositif de commande (6), une entrée (8), et une sortie (10),
dans lequel la tête de mesure comprend une paroi intérieure (12) définissant une cavité (14) ayant une ouverture (16) s'étendant dans un plan de mesure (18),
dans lequel la cavité est en communication fluidique avec l'entrée, et la cavité est en communication fluidique avec la sortie,
dans lequel la tête de mesure est agencée pour adosser l'ouverture contre une paroi déformable d'un emballage étanche (22) de telle sorte qu'une chambre (24) est formée en étant délimitée par la paroi intérieure et une région de la paroi déformable
dans lequel le dispositif de détermination de distance est agencé pour déterminer une distance jusqu'à un point prédéterminé sur la paroi déformable dans une direction sensiblement perpendiculaire au plan de mesure, et dans lequel le dispositif de détermination de distance est en outre agencé pour communiquer la distance déterminée au dispositif de commande,
dans lequel le dispositif de commande est agencé pour commander une unité de commande d'afflux en communication fluidique avec l'entrée et/ou une unité de commande de déversement en communication fluidique avec la sortie sur la base de la distance déterminée de telle sorte qu'une pression est obtenue dans la chambre qui est sensiblement égale à une pression régnant dans l'emballage ;
**caractérisé en ce que** le dispositif de commande est agencé pour commander l'augmentation et la diminution de l'afflux et/ou du déversement de fluide sur la base de la distance déterminée d'une manière oscillante, de sorte que la pression dans la chambre oscille.

11. Appareil selon la revendication 10, dans lequel la cavité comprend en outre un capteur de pression agencé pour déterminer la pression dans la chambre.

12. Appareil selon la revendication 10 ou 11, dans lequel l'unité de commande de déversement comprend une pompe et/ou une vanne ; et/ou dans lequel l'unité de commande d'afflux comprend une pompe et/ou une vanne (34), dans lequel le dispositif de commande est agencé pour
- ouvrir, ou ouvrir davantage, la vanne qui commande l'afflux et/ou le déversement ou fermer, ou fermer davantage, ladite vanne.

13. Appareil selon l'une quelconque des revendications 10 à 12, dans lequel le dispositif de commande est agencé pour
- augmenter ou diminuer l'action de pompage d'une pompe (36) qui fournit l'afflux et/ou le déversement, comme la mise en marche ou l'arrêt de la pompe.

14. Appareil selon l'une quelconque des revendications 10 à 13, dans lequel le dispositif de commande est agencé pour
- commander l'afflux et/ou le déversement de fluide sur la base de la distance déterminée, de telle sorte que la pression dans la chambre est à l'équilibre avec la pression régnant dans l'emballage.

15. Appareil selon l'une quelconque des revendications 10 à 14, dans lequel le dispositif de commande est agencé pour
- commander l'augmentation et la diminution de l'afflux et/ou du déversement de fluide, de telle sorte que la pression dans la chambre oscille avec une amplitude prédéterminée.

16. Appareil selon l'une quelconque des revendications 10 à 15, dans lequel le dispositif de commande est agencé pour commander l'augmentation et la diminution de l'afflux et/ou du déversement de fluide de telle sorte que l'oscillation comprend l'ouverture ou l'ouverture supplémentaire de la vanne et/ou la diminution comprend la fermeture ou la fermeture supplémentaire de la vanne d'une manière oscillatoire.

17. Ensemble comprenant un appareil selon l'une quelconque des revendications 10 à 16 et un emballage étanche ayant une première paroi déformable, dans lequel la première paroi déformable comprend une paroi sensiblement hermétique à l'air.
